Europäisches Patentamt

**European Patent Office**

Office européen des brevets

(11) Veröffentlichungsnummer: **0 055 861**

**A1**

# (12) EUROPÄISCHE PATENTANMELDUNG

(21) Anmeldenummer: **81110839.8**

(22) Anmeldetag: **30.12.81**

(51) Int. Cl.³: **F 16 B 12/10**

(30) Priorität: 02.01.81 DE 8100017 U
26.11.81 DE 3146879

(43) Veröffentlichungstag der Anmeldung:
14.07.82 Patentblatt 82/28

(84) Benannte Vertragsstaaten:
AT BE CH DE FR GB IT LI LU NL SE

(71) Anmelder: **Schäfer, Rolf**
**Moosgrund 21**
**D-7800 Freiburg i.Br.(DE)**

(72) Erfinder: **Schäfer, Rolf**
**Moosgrund 21**
**D-7800 Freiburg i.Br.(DE)**

(74) Vertreter: **Ott, Elmar, Dipl.-Ing.**
**Kappelstrasse 8**
**D-7240 Horb 1(DE)**

(54) **Befestigungselement für Möbel.**

㉗ Die Erfindung betrifft ein Befestigungselement für Möbel, mit dem senkrechte und waagrechte Bretter miteinander verbunden werden können. Das Befestigungselement besteht im wesentlichen aus einem Winkel (1), dessen waagrechter Schenkel (8) an der Oberseite einen Schraubenkopf (3) und an der Unterseite eine Einschlagmuffe (4) hat. Die Einschlagmuffe (4) wird in ein senkrecht unter dem waagrechten Schenkel (8) zu befestigendes Stützbrett eingeschlagen. Dieses Stützbrett wird dann durch eine in die Einschlagmuffe (4) einzusetzende Schraube mit dem Befestigungselement verschraubt und verlängert dadurch den waagrechten Schenkel (8) des Befestigungselementes sowie dessen senkrechten Schenkel (5).

Fig.1

Croydon Printing Company Ltd.

– 7 –

Anmelder: Rolf Schäfer
M 4281

## Befestigungselement für Möbel

Die Erfindung betrifft ein Befestigungselement, insbesondere zur Verwendung als Trag- und Verbindungselement für Möbel, das im wesentlichen aus einem Winkel besteht, dessen senkrecht nach oben stehender Schenkel eine Bohrung hat und dessen waagrechter Schenkel eine Steckvorrichtung mit wenisgstens einem zylindrischen Steckelement aufweist.

Im Möbelbau werden unterschiedliche Befestigungselemente verwendet, mit denen beispielsweise Zwischenböden oder Seitenwände befestigt werden können. Aus der DE-PS 24 28 240 ist ein solches Befestigungselement bekannt, welches im wesentlichen aus einem metallischen Winkel und einem an diesem befestigten Zapfen besteht. Dieser bekannte Winkel kann mittels einer Holzschraube an einer Decke oder einer Wand angeschraubt werden. Auf den Zapfen kann ein Brett aufgesteckt werden, welches von einer mit dem Winkel fest verbundenen Blattfeder an den Zapfen gedrückt wird. Das Brett sitzt somit nicht mehr lose auf dem Zapfen, sondern es ist eine gewisse Kraft erforderlich, um das Brett vom Zapfen wieder abziehen zu können. Dieses bekannte Befestigungselement ist insbesondere als Auflageelement für Fachbretter geeignet. Eine Form-

./.

schlüssige Verbindung zwischen den aufgesteckten Brettern und dem Befestigungselement wird nicht erreicht.

Der Erfindung liegt die Aufgabe zugrunde, ein Befestigungselement zu schaffen, mit dem eine sichere Verbindung von senkrechten und waagrechten Brettern möglich ist.

Die der Erfindung zugrunde liegende Aufgabe wird bei einem Befestigungselement der eingangs genannten Gattung dadurch erhalten, daß sich an der Oberseite des waagrechten Schenkels ein abnehmbares erstes Steckelement befindet, das über eine den waagrechten Schenkel durchdringende Schraube mit einem zweiten an der Unterseite des waagrechten Schenkels befindlichen zweiten Steckelement verbunden ist.

Das Befestigungselement kann mittels einer in die am senkrechten Schenkel vorgesehene Bohrung eingesetzte Holzschraube an einer Wand oder einer Decke befestigt werden. Außerdem weist es am anderen Schenkel zwei Steckelemente auf, so daß an jeder Seite des waagrechten Schenkels ein Brett oder eine Leiste aufgesteckt werden kann. Die aufgesteckten Bretter können dabei auch senkrecht zueinander stehen.

Um eine einfache Montage des Befestigungselementes zu erhalten, sieht die Erfindung weiterhin vor, daß das erste Steckelement ein zylindrischer Schraubenkopf mit einem Innengewindeabschnitt ist; und daß ein Gewindestift in diesen Innengewindeabschnitt und in das zweite Steckelement eingreift.

./.

Durch die Schraubverbindung der beiden Steckelemente ist es möglich, daß gegebenenfalls auch nur ein Steckelement am Winkel beispielsweise mittels einer Senkkopfschraube angeschraubt wird. Je nach den gegebenen Anforderungen, kann dieses Steckelement an der Oberseite oder an der Unterseite des waagrechten Schenkels angebracht werden.

Vorzugsweise ist das erfindungsgemäße Befestigungselement so ausgebildet, daß das zweite Steckelement eine Einschlagmuffe mit Innengewinde ist. Dies bietet die Möglichkeit, daß an der Unterseite des waagrechten Schenkels eine formschlüssige Verbindung über die Einschlagmuffe mit einem Brett erhalten werden kann. Zu diesem Zweck wird die Einschlagmuffe in eine Bohrung an dem zu befestigenden Brett eingeschlagen und falls erforderlich zusätzlich noch mit diesem Brett verleimt.

Eine Weiterbildung der Erfindung sieht vor, daß der Schraubenkopf oberhalb des Gewindeabschnittes einen Ansatzbereich für ein Werkzeug hat. Dieser Ansatzbereich ist vorzugsweise als Innensechskant ausgebildet. Zur Befestigung des zylindrischen Schraubenkopfes wird zunächst der Gewindestift von unten in den Gewindeabschnitt des Schraubenkopfes eingesetzt. Dann kann der Schraubenkopf zusammen mit dem eingesetzten Gewindestift durch eine Bohrung im waagrechten Schenkel hindurchgeführt und in das Innengewinde der Einschlagmuffe eingedreht werden. Mittels eines sogenannten Inbusschlüssels kann der Schraubenkopf fest angezogen werden.

./.

Um eine Fixierung der auf den zylindrischen Schraubenkopf aufgesteckten Bretter zu erhalten, ist weiterhin vorgesehen, daß zwischen dem ersten an der Oberseite des waagrechten Schenkels befindlichen Steckelement und diesem Schenkel eine Blattfeder eingesetzt ist, die bis zum senkrechten Schenkel in etwa gerade ausgebildet ist und dann mit einer nach innen gerichteten Wölbung an dem senkrechten Schenkel hochgezogen ist. Die Blattfeder wird vor dem festschrauben des Schraubenkopfes an der Innenseite des Winkels eingelegt.

Eine besonders gute Fixierung der auf den Schraubenkopf aufgesetzten Bretter wird dadurch erhalten, daß das beim senkrechten Schenkel liegende Ende der Blattfeder nach innen in etwa waagrecht abgebogen ist. Der dadurch entstehende nach innen gerichtete Rand drückt von oben auf ein eingesetztes Brett, wodurch dieses festgehalten wird. Selbst wenn die auf den Schraubenkopf aufgesetzten Bretter so stark sind, daß der Rand nur seitlich an die Bretter drücken kann, so wird dennoch eine wesentlich bessere Klemmwirkung erzielt, als dies bei Blattfedern ohne diesen Rand der Fall ist.

Das erfindungsgemäße Befestigungselement erlaubt es, an der Unterseite des waagrechten Schenkels ein Stützbrett auf die Einschlagmuffe zu setzten, welches den nach oben stehenden Schenkel des Winkels nach unten und auch den waagrechten Schenkel verlängert. Auf der Oberseite des waagrechten Schenkels kann dann ein waagrechtes Brett aufgesteckt werden, welches von dem darunter befindlichen senkrechten Stützbrett gestützt

./.

wird. Wird im Bereich der beiden Enden des waagrechten Brettes jeweils ein Stützbrett vorgesehen, so kann diese gesamte Regalkonstruktion mittels zweier in die senkrechten Schenkel der Befestigungselemente eingesetzten Schrauben an einer Wand befestigt werden. Zur Erhöhung der Stabilität bzw. der Tragfähigkeit einer solchen Konsole, kann weiterhin vorgesehen sein, daß der waagrechte Schenkel zur Aufnahme von zwei oder mehr mit Abstand nebeneinander angeordneten Steckelementen entsprechend verlängert ist. Auf diese Weise lassen sich auch tiefere Konsolen mit hoher Tragfähigkeit zusammensetzen.

Damit die aufliegenden waagrechten Bretter seitlich verlängert werden können, sieht eine Weiterbildung der Erfindung vor, daß das Befestigungselement so breit ausgeführt ist, daß es wenigstens zwei hintereinanderliegende Steckelemente aufnehmen kann. Das Befestigungselement ist in diesem Fall doppelt so breit ausgeführt wie das Befestigungselement mit nur einem zylindrischen Schraubenkopf.

Für besondere Anwendungsfälle ist es durchaus möglich, daß der Winkel mit den Steckelementen ein einstückiges Teil ist. Ein solches Teil kann dann aus Kunststoff oder Metall gefertigt sein.

Die Erfindung ist nachfolgend anhand der Zeichnungen näher erläutert. Es zeigen:

Fig. 1 ein erfindungsgemäßes Befestigungselement,

Fig. 2 ein verlängertes und verbreitertes Befestigungselement,

Fig. 3 das in Fig. 1 dargestellte Befestigungselement im Schnitt,

Fig. 4 eine mögliche Ausführungsform des Befestigungselementes im Schnitt und

Fig. 5 das erfindungsgemäße Befestigungselement als Verbindungsteil zwischen einem waagrechten Brett und einem senkrechten Stützbrett.

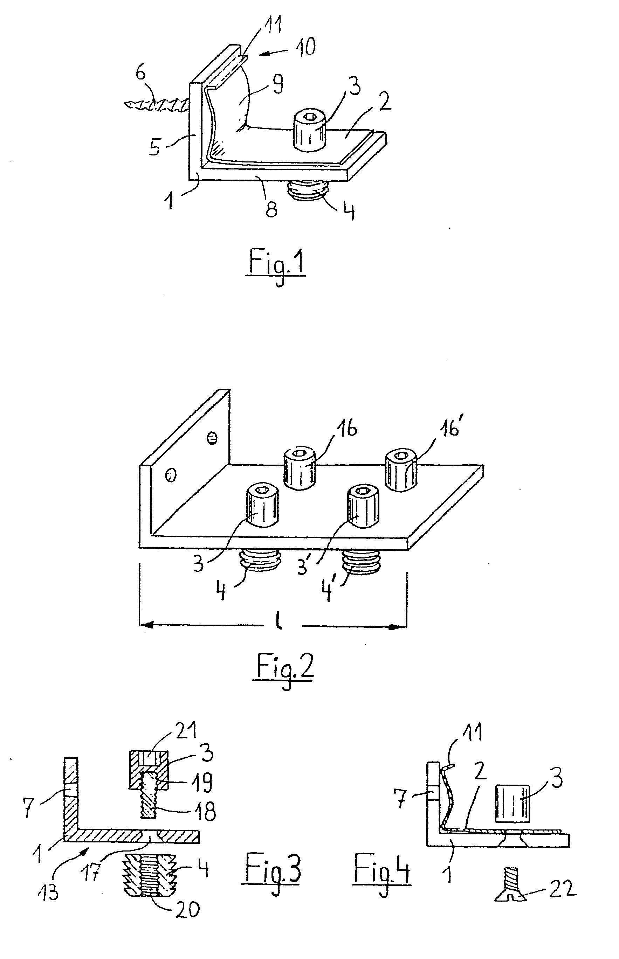

Das in Fig. 1 dargestellte Befestigungselement besteht aus einem Winkel 1, einer Blattfeder 2, einem zylindrischen Schraubenkopf 3 und einer Einschlagmuffe 4. Am senkrechten Schenkel 5 ist eine Holzschraube 6 in eine hier nicht dargestellte Bohrung 7 (Fig. 3, Fig. 4) eingesetzt.

Der zylindrische Schraubenkopf 3 und die Einschlagmuffe 4 sind am waagrechten Schenkel 8 befestigt. Die Blattfeder 2 wird von dem Schraubenkopf 3 am Winkel 1 festgehalten. Im Bereich des senkrechten Schenkels 5 hat die Blattfeder 2 eine nach innen gerichtete Wölbung 9 und an ihrem Ende 10 einen nach innen gerichteten Rand 11. Der Rand 11 steht in etwa senkrecht zum senkrechten Schenkel 5 und zeigt damit in Richtung Schraubenkopf 3. Wird nun ein waagrechtes Brett, welches eine dem Schraubenkopf 3 angepasste Bohrung aufweist, auf den waagrechten Schenkel 8 aufgesetzt, so wird die Wölbung 9 der Blattfeder 2 zum senkrechten Schenkel 5 gedrückt und der Rand 11 greift dann an dem aufgesteckten Brett ein. Durch den Druck, den ein aufgesetztes Brett auf die Wölbung 9 ausübt, wird der Rand 11 in Richtung Brett bewegt. Entweder greift der Rand 11 seitlich am

./.

Brett an oder er greift von oben auf das Brett, wenn dessen Oberkante direkt unter dem Rand 11 zu liegen kommt.

Die Holzschraube 6 wird vor der Montage der Blattfeder 2 in den senkrechten Schenkel 5 eingesetzt. Der Winkel 1 kann dann zunächst an einer Wand oder drgl. festgeschraubt werden und danach mit der Blattfeder 2, dem Schraubenkopf 3 und der Einschlagmuffe 4 versehen werden. Es besteht aber auch grundsätzlich die Möglichkeit, in der Blattfeder 2 im Bereich der Holzschraube 6 ein Loch vorzusehen, durch das die Holzschraube 6 nachträglich in den senkrechten Schenkel 5 eingesetzt werden kann. Ein solches Loch vermindert aber die Wirkung der Blattfeder 2, weshalb diese Lösung nur in besonderen Fällen sinnvoll sein dürfte.

Die Montage des Befestigungselementes erfolgt vorzugsweise in der Reihenfolge, daß zunächst der Winkel 1 mit der Holzschraube 6 festgeschraubt wird, daß die Einschlagmuffe 4 in eine entsprechende Bohrung eines Brettes eingeschlagen wird und daß dann die Einschlagmuffe 4 zusammen mit dem Brett, in das sie eingeschlagen ist, mit dem waagrechten Schenkel 8 verbunden wird. Zu diesem Zweck wird der Schraubenkopf 3 mit der Einschlagmuffe 4 verschraubt. Eine Ausführungsform der Schraubverbindung ist in Fig. 3 dargestellt.

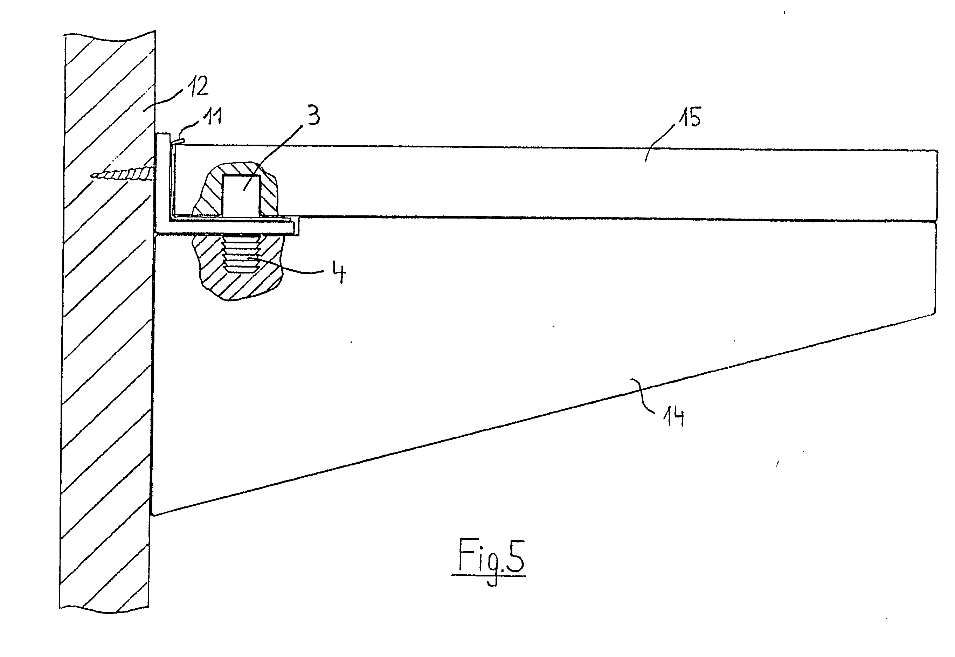

In Fig. 5 ist ein Anwendungsbeispiel angegeben. Das dort dargestellte Befestigungselement ist mit einer Holzschraube 6 an einer Wand 12 befestigt. An der Unterseite 13 des waagrechten Schenkels 8 ist ein Stützbrett 14 festgeschraubt. In das Stützbrett ist eine Einschlagmuffe 4 eingesetzt, die mit dem Schrauben-

./.

kopf 3 verschraubt ist. Das Stützbrett 14 verlängert sowohl den senkrechten Schenkel 5 als auch den waagrechten Schenkel 8. Durch diese Maßnahme ist es möglich, ein waagrechtes Brett 15 auf dem Befestigungselement und dem Stützbrett 14 aufzulegen, dessen Breite b wesentlich größer ist als die Länge l des waagrechten Schenkels 8. Auf diese Weise lassen sich Konsolen oder Regalkonstruktionen realisieren, die eine große Tiefe (b) haben können.

Zur Erhöhung der Tragfähigkeit des Befestigungselementes kann der waagrechte Schenkel 8 verlängert sein und zwei oder auch mehr nebeneinanderliegende Schraubenköpfe aufweisen. In Fig. 2 ist ein derart vergrößertes Befestigungselement angegeben, welches zusätzlich noch verbreitert ist.

Das verbreiterte und verlängerte Befestigungselement hat die zwei benachbarten, mit Abstand voneinander angeordneten Schraubenköpfe 3, 3' und die zugeordneten Einschlagmuffen 4, 4'. Durch die Verbreiterung des Befestigungselementes können dahinter noch die beiden Schraubenköpfe 16 und 16' angeordnet sein, die ebenfalls mit hier nicht erkennbaren Einschlagmuffen in Verbindung stehen.

Das in Fig. 2 dargestellte Befestigungselement ermöglicht es, Bretter mit einer größeren Breite b zu befestigen. Außerdem können mit diesem Befestigungselement zwei hintereinanderliegende Bretter miteinander verbunden werden. Die Stoßfuge der hintereinanderliegenden, auf dem Befestigungselement aufliegenden Bretter würde dann in der Mitte zwischen den Schraubenköpfen 3 und 16 bzw. 3' und 16' ver-

./.

laufen.

In Fig. 3 ist der Winkel 1 im Schnitt dargestellt. Die Bohrung 7 ist an die Form der einzusetzenden Schraube angepaßt. Der waagrechte Schenkel 8 hat eine Durchführung 17, durch die beispielsweise ein Gewindestift 18 hindurchgesteckt werden kann.

Im dargestellten Ausführungsbeispiel ist der Gewindestift 18 in den Schraubenkopf 3 eingeschraubt, der zu diesem Zweck einen Innengewindeabschnitt 19 aufweist. Um eine feste Verbindung zwischen Einschlagmuffe 4 und dem Schraubenkopf 3 zu erhalten, wird der Gewindestift 18 in ein an der Einschlagmuffe 4 vorgesehenes Innengewinde 20 eingeschraubt. Das Einschrauben kann mittels eines hier nicht dargestellten Sechskantschlüssels erfolgen, der in einen Innensechskant 21 einsetzbar ist, der sich oben am Schraubenkopf 3 befindet.

Selbstverständlich kann der Schraubenkopf 3 und der Gewindestift 18 auch als einstückiges Teil ausgebildet sein. Vor dem Verschrauben des Schraubenkopfes 3 mit der Einschlagmuffe 4 kann die in dieser Figur nicht dargestellte Blattfeder 2 innen auf den Winkel 1 aufgesetzt werden.

In Fig. 4 ist eine weitere Ausführungsform des erfindungsgemäßen Befestigungselementes angegeben, bei dem auf die Verwendung einer Einschlagmuffe verzichtet wurde. Wenn kein Stützbrett an der Unterseite des waagrechten Schenkels 8 zu befestigen ist, dann genügt es den Schraubenkopf 3 mit einer Metallschraube 22 am Winkel 1 zu befestigen. Der Schraubenkopf 3 ist deshalb vorzugsweise so ausgebildet, daß er sowohl einen Gewindestift 18 als auch eine Metallschraube 22 aufnehmen
kann. Die Durchführung 17 im waagrechten Schenkel 8
ist vorzugsweise so ausgebildet, daß sie den Senkkopf einer Metallschraube 22 aufnehmen kann.

Der Winkel 1, wie er in Fig. 1 dargestellt ist, kann
beispielsweise einen waagrechten Schenkel 8 mit einer
Länge von 30 mm und einen senkrechten Schenkel 5 mit
einer Höhe von 20 mm haben. Dabei kann die Breite
des Winkels ebenfalls ca. 20 mm betragen.

0055861

Kappelstraße 8        D-7240 Horb 1        Telefon 07451,8303

- 1 -

Anmelder: Rolf Schäfer

M 4281

## Patentansprüche

1. Befestigungselement, insbesondere zur Verwendung als Trag- und Verbindungselement für Möbel, das im wesentlichen aus einem Winkel besteht, dessen senkrecht nach oben stehender Schenkel eine Bohrung hat und dessen waagrechter Schenkel eine Steckvorrichtung mit wenigstens einem zylindrischen Steckelement aufweist, d a d u r c h   g e k e n n- z e i c h n e t, daß sich an der Oberseite des waagrechten Schenkels (8) ein abnehmbares erstes Steckelement (3) befindet, das über eine den waagrechten Schenkel (8) durchdringende Schraube (18) mit einem zweiten an der Unterseite (13) des waagrechten Schenkels (8) befindlichen zweiten Steckelement (4) verbunden ist.

2. Befestigungselement nach Anspruch 1, d a d u r c h   g e k e n n z e i c h n e t, daß das erste Steck- element ein zylindrischer Schraubenkopf (3) mit einem Innengewindeabschnitt (19) ist; und daß ein Gewindestift (18) in diesen Innengewindeabschnitt (19) und in das zweite Steckelement (4) eingreift.

3. Befestigungselement nach einem der Ansprüche 1 oder 2, d a d u r c h   g e k e n n z e i c h n e t, daß das zweite Steckelement eine Einschlagmuffe (4) mit Innengewinde (20) ist.

./.

4. Befestigungselement nach einem der vorhergehenden Ansprüche, d a d u r c h g e k e n n z e i c h n e t, daß der Schraubenkopf (3) oberhalb des Gewindeabschnittes (19) einen Ansatzbereich für ein Werkzeug hat.

5. Befestigungselement nach Anspruch 4, d a d u r c h g e k e n n z e i c h n e t, daß als Ansatzbereich oben am Schraubenkopf (3) ein Innensechskant (21) vorgesehen ist.

6. Befestigungselement nach einem der vorhergehenden Ansprüche, d a d u r c h g e k e n n z e i c h n e t, daß zwischen dem ersten an der oberen Seite des waagrechten Schenkels (8) befindlichen Steckelement (3) und diesem Schenkel (8) eine Blattfeder (2) eingesetzt ist, die bis zum senkrechten Schenkel (5) in etwa gerade ausgebildet ist und dann mit einer nach innnen gerichteten Wölbung (9) an dem senkrechten Schenkel (5) hochgezogen ist.

7. Befestigungselement nach Anspruch 6, d a d u r c h g e k e n n z e i c h n e t, daß das beim senkrechten Schenkel (5) liegende Ende (10) der Blattfeder (2) nach innen in etwa waagrecht abgebogen ist.

8. Befestigungselement nach einem der Ansprüche 6 oder 7, d a d u r c h g e k e n n z e i c h n e t, daß die Blattfeder (2) ein gehärtetes Stahlband ist.

9. Befestigungselement nach einem der vorhergehenden Ansprüche, d a d u r c h g e k e n n z e i c h n e t, daß der waagrechte Schenkel (8) zur Aufnahme von zwei oder mehr mit Abstand nebeneinander angeordneten Steckelementen (3, 3´) entsprechend verlängert ist.

./.

- 3 -        **0055861**

10. Befestigungselement nach einem der vorgergehenden Ansprüche, d a d u r c h  g e k e n n z e i c h n e t, daß das Befestigungselement so breit ausgeführt ist, daß es wenigstens zwei hintereinanderliegende Steckelemente (3 und 16; 3´ und 16´) aufnehmen kann.

11. Befestigungselement nach einem der vorhergehenden Ansprüche, d a d u r c h  g e k e n n z e i c h n e t, daß der Winkel (1) mit den Steckelementen (3, 3´, 16, 16´; 4, 4´) ein einstückiges Teil ist.

./.

0055861

1/2

Fig.1

Fig.2

Fig.3    Fig.4

Fig.5

EUROPÄISCHER RECHERCHENBERICHT

**Europäisches Patentamt**

**0055861**
Nummer der Anmeldung

EP 81 11 0839.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE - B - 1 554 220 (FRANKE) <br> * Fig. 1 * | 1-4 |
| Y,A | DE - A1 - 2 644 397 (INBAUPRODUCT INNENAUSBAUSYSTEME) <br> * Fig. 2 * | 1, 9,11 |
| Y | DE - U1 - 7 836 485 (AERPAT) <br> * Fig. 1 * | 1-3 |
| Y,A | CH - A - 130 119 (HÄFELIN) <br> * Fig. 1 * | 1,6-8 |
| Y | CH - A - 257 081 (FREY) <br> * Fig. 2 * | 1,4 |
| A | FR - E - 84 235 (MACARDIER) <br> * Fig. 3 * | 1,4 |
| A | FR - A - 1 560 471 (RANGER) <br> * Fig. 2 * | 1 |
| A | DE - A1 - 2 836 056 (HEROLD) <br> * Fig. 1 * | 5 |

----

**KLASSIFIKATION DER ANMELDUNG (Int Cl.³)**

F 16 B 12/10

**RECHERCHIERTE SACHGEBIETE (Int. Cl.³)**

F 16 B 5/00
F 16 B 12/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-03-1982 | ZAPP |

EPA form 1503.1  06.78